# EUROPEAN PATENT SPECIFICATION

(11) **EP 3 073 088 B1**
(45) Date of publication and mention of the grant of the patent: **07.03.2018**
(21) Application number: 15000858.9
(22) Date of filing: 24.03.2015
(51) Int. Cl.: F02B 29/04, F28F 9/00, F02M 35/10

(54) **HOUSING ELEMENT FOR AIR COOLER**
GEHÄUSEELEMENT FÜR LUFTKÜHLER
ÉLÉMENT DE BOÎTIER POUR REFROIDISSEUR D'AIR

(43) Date of publication of application: 28.09.2016
(73) Proprietor: Caterpillar Motoren GmbH & Co. KG, 24159 Kiel (DE)
(72) Inventor: Wagener, Benjamin, 23795 Schackendorf (DE); Sturm, Michael, 24214 Gettorf (DE); Abraham, Volker, 24159 Kiel (DE)
(74) Representative: BRP Renaud & Partner mbB Rechtsanwälte Patentanwälte Steuerberater

(56) References cited:
- EP-A2- 1 329 610
- DE-A1-102007 030 464
- US-A- 6 029 345

## Description

### Technical Field

The present disclosure relates to a housing element, and more particularly to a housing element associated with an air cooler of an engine system.

### Background

Engines, for example, medium speed engines, typically use an insert type air cooler for cooling charge air received from a turbocharger of the engine. The air cooler is sealed within a housing in order to suppress any air bypass. The air cooler transfers cooled charge air from the turbocharger to the engine. Further, an assembly and disassembly of the air cooler is carried out several times during a life cycle of the engine, for maintenance and servicing of the air cooler. Installing the air cooler within the housing may be a tedious, laborious, and costly process.

The engine generally includes another housing that serves as an air inlet housing. The air inlet housing receives and collects the charge air downstream of the turbocharger. The air inlet housing may be bolted to the air cooler housing. Further, for positioning of the air cooler within the air cooler housing, holding devices are generally provided from both sides of the air cooler housing, requiring extensive machining of the air cooler and the housing of the air cooler.

These additional components, connections, and positioning of the air cooler within the engine system leads to an increase in the overall assembly, maintenance, and component costs.

A radiator, charge air cooler and condenser mounting method is disclosed in US 6 029 345 A.

### Summary of the Disclosure

In one aspect of the present disclosure, a housing element associated with an engine system is provided. The housing element includes an inlet portion defined on a first sidewall of the housing element. The housing element also includes an outlet portion defined on a second sidewall of the housing element. The housing element further includes an opening defined on a third sidewall of the housing element and being configured to receive an air cooler therethrough; the third sidewall is adjacent and generally perpendicular to the second sidewall. The housing element further includes a plate including a first section and a second section. The first section of the plate is fixedly coupled to an inner side of a bottom wall of the housing element. Further, the second section of the plate extends from the first section, wherein the second section is configured to move relative to the bottom wall of the housing element and wherein a position of the air cooler within an interior space of the housing element is configured to be adjusted based on the movement of the plate.

In another aspect of the present disclosure, a method for positioning an air cooler within an interior space of a housing element is provided. The method includes coupling a first section of a plate to an inner side of a bottom wall of the housing element. The method also includes inserting the air cooler into the interior space of the housing element through an opening defined on a sidewall of the housing element, wherein the air cooler is inserted above and adjacent to a second section of the plate. The method further includes tightening screw elements positioned on an outer side of the bottom wall. The method includes moving the second section of the plate based on the tightening of the screw elements. The method also includes adjusting a height of the air cooler within the interior space of the housing element based on the movement of the second section of the plate.

In yet another aspect of the present disclosure, a housing element for an air cooler is provided. The housing element includes an inlet portion defined on a first sidewall of the housing element. The housing element also includes an outlet portion defined on a second sidewall of the housing element. The housing element further includes an opening defined on a third sidewall of the housing element; the third sidewall is adjacent and generally perpendicular to the second sidewall. The air cooler is received into the interior space of the housing element through the opening. The housing element includes a plate including a first section and a second section, the first section of the plate is fixedly coupled to an inner side of a bottom wall of the housing element. The second section of the plate extends from the first section and the second section is configured to move relative to the bottom wall of the housing element. Further, a position of the air cooler within the housing element is adjusted based on the movement of the second section of the plate within the housing element.

Other features and aspects of this disclosure will be apparent from the following description and the accompanying drawings.

### Brief Description of the Drawings

FIG. 1 is a schematic view of an exemplary engine system, according to one embodiment of the present disclosure;
FIG. 2 is a partial cutaway view of a portion of an air intake system associated with the engine;
FIG. 3 is a perspective view of a housing element, according to one embodiment of the present disclosure;
FIG. 4 is a perspective view of a plate associated with the housing element, according to one embodiment of the present disclosure;
FIGS. 5, 6, 7 are cross sectional views of the housing element, according to various embodiments of the present disclosure; and
FIG. 8 is a flowchart for a method of positioning the air cooler within an interior space of the housing element.

### Detailed Description

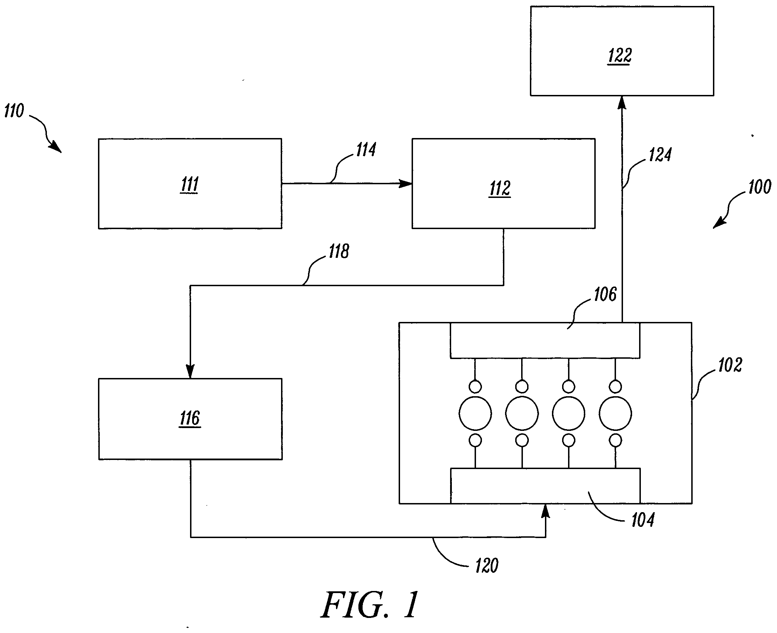

Wherever possible, the same reference numbers will be used throughout the drawings to refer to the same or the like parts. FIG. 1 illustrates an exemplary engine system 100, according to one embodiment of the present disclosure. The engine system 100 may include an engine 102. In one embodiment, the engine 102 may include, for example, a diesel engine, a gasoline engine, a gaseous fuel powered engine such as, a natural gas engine, a combination of known sources of power, or any other type of power source apparent to one of skill in the art. As shown, the engine 102 may include an intake manifold 104 and an exhaust manifold 106. The intake manifold 104 is configured to receive intake air, which may include traces of recirculated exhaust gases therein, through an air intake system 110. Products of combustion may be exhausted from the engine 102 via the exhaust manifold 106.

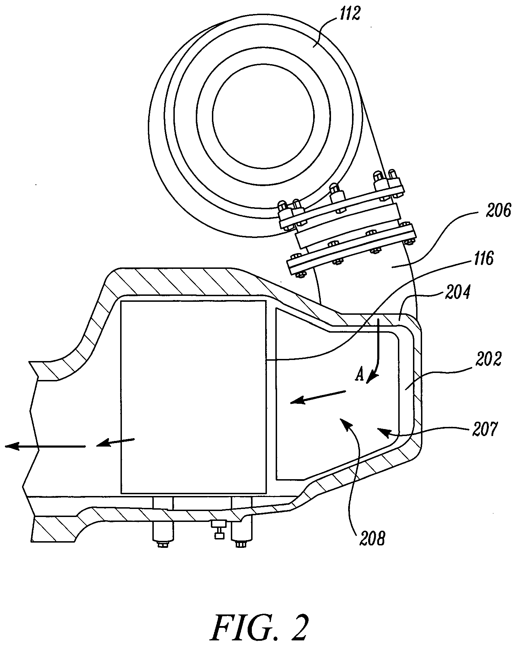

Ambient air may be drawn into the engine 102 through an air filter 111 of the air intake system 110. Referring to FIGS. 1 and 2, the air intake system 110 of the engine system 100 may include a turbocharger 112. The intake air may be introduced into the turbocharger 112 via line 114 (see FIG. 1), for compression purposes leading to a higher pressure thereof. The compressed intake air may then flow towards an air cooler 116 that is fluidly coupled to the turbocharger 112 via line 118 (see FIG. 1). The air cooler 116 is configured to decrease a temperature of the intake air flowing therethrough. The air cooler 116 is provided within a housing element 202 (see FIG. 2). The air cooler 116 may be embodied as an insert type air cooler. In one embodiment, the air cooler 116 is an air to liquid cooler. Alternatively, the air cooler 116 may embody an air to air cooler, or any heat exchanger capable of cooling the intake air flowing thereover. For illustrative and clarity purposes, the air cooler 116 is shown as a block in the accompanying figures. The intake air may then enter an intake air line 120 (see FIG. 1), before being introduced into the intake manifold 104 (see FIG. 1). The intake air line 120 may be fluidly coupled to the intake manifold 104.

As shown in FIG. 1, the engine system 100 also includes an exhaust system 122. The exhaust system 122 is provided in fluid communication with the exhaust manifold 106, via line 124. The exhaust system 122 is configured to treat an exhaust gas flow exiting the exhaust manifold 106 of the engine 102. The exhaust gas flow contains emission compounds that may include oxides of nitrogen (NOx), unburned hydrocarbons, particulate matter, and/or other combustion products known in the art. The exhaust system 122 may be configured to trap or convert NOx, unburned hydrocarbons, particulate matter, combinations thereof, or other combustion products present in the exhaust gas flow, before exiting the engine system 100. The lines 114, 118, 120, 124 may embody any of a conduit, pipe, tube, and the like.

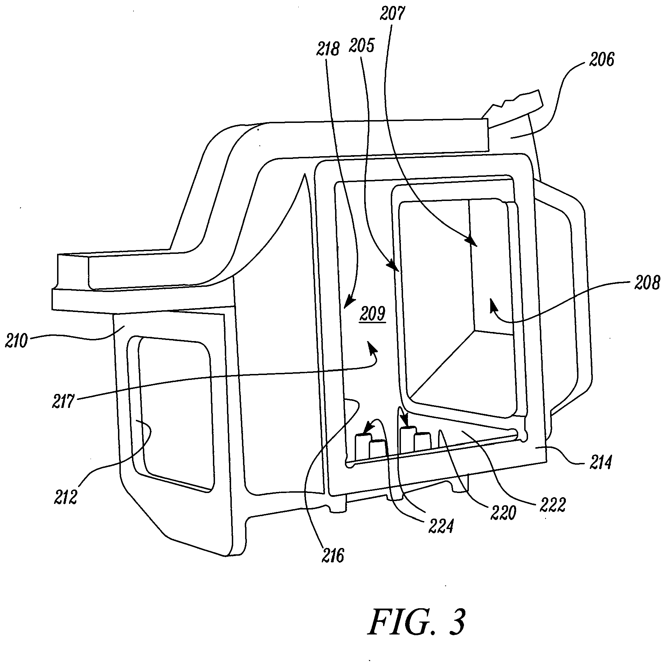

Referring now to FIGS. 3, a perspective view of the housing element 202 associated with the engine system 100 is shown. The housing element 202 may be embodied as a unitary component, and may be made of a metal or a non-metal, without limiting the scope of the present disclosure. The housing element 202 includes a first sidewall 204 (see FIG. 2). An inlet portion 206 is defined on the first sidewall 204 of the housing element 202. The inlet portion 206 of the housing element 202 is fluidly connected to the turbocharger 112 (see FIGS. 1 and 2).

The housing element 202 includes a passage 205 provided on an internal wall 209 of the housing element 202. A first section 207 and a second section 217 are defined on either sides of the passage 205. The first section 207 is in communication with the inlet portion 206. The first section 207 defines an interior space 208 on an upstream side of the internal wall 209 with respect to an intake air flow direction "A". The interior space 208 is configured to receive and collect the compressed intake air from the turbocharger 112 therein. Further, the housing element 202 also includes a second sidewall 210. An outlet portion 212 is defined on the second sidewall 210 of the housing element 202. The outlet portion 212 of the housing element 202 is fluidly connected to a cylinder head (not shown) of the engine 102 via the intake air line 120 and the intake manifold 104 (see FIGS. 1 and 2). In another example, the outlet portion 212 may be fluidly coupled to a charge-air duct (not shown).

As shown in the accompanying figures, the housing element 202 includes a third sidewall 214. The third sidewall 214 is provided adjacent to and generally perpendicular to the second sidewall 210. An opening 216 is defined on the third sidewall 214 of the housing element 202. The opening 216 communicates with an interior space 218 defined by the second section 217 of the housing element 202. The second section 217 defines the interior space 218 on a downstream side of the internal wall 209, with respect to the intake air flow direction "A". The air cooler 116 is inserted through the opening 216 and received into the interior space 218 of the second section 217 through the opening 216.

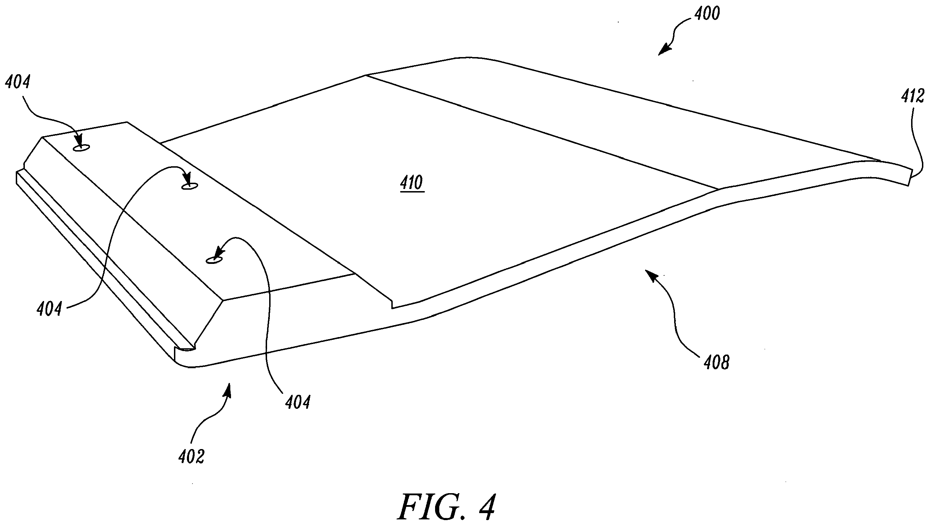

Referring now to FIGS. 4, 5, 6, and 7, the housing element 202 includes a plate 400. The plate 400 is provided within the housing element 202 such that, when the air cooler 116 is assembled with the housing element 202, the plate 400 contacts the air cooler 116 near a central portion of the air cooler 116. The term central portion referred to herein may be defined as the "center of gravity" of the air cooler 116, such that the plate 400 contacts the air cooler 116 near the center of gravity thereof. Further, a shape of the plate 400 is decided such that during the assembly of the air cooler 116 within the housing element 202, the plate 400 provides a surface 410 (see FIG. 4) for the air cooler 116 to slide on. The plate 400 may be made of a material which exhibits flexibility in operation. Further, the plate 400 may be subjected to a corrosive environment and wear during operation. Hence, the material of the plate 400 is selected such that the plate 400 is corrosion and wear resistant. In one example, the plate 400 may be made of a metal, such as steel. Alternatively, any other metallic or non-metallic material may be used for manufacturing the plate 400.

The plate 400 includes a first section 402. The first section 402 of the plate 400 is fixedly coupled to an inner side 220 of a bottom wall 222 of the housing element 202. The first section 402 of the plate 400 includes openings 404 provided therein. The openings 404 may be embodied as through-holes or blind holes. The openings 404 on the first section 402 are aligned with corresponding openings (not shown) provided on the bottom wall 222 of the housing element 202, in order to receive mechanical fasteners 406 to fixedly connect the first section 402 of the plate 400 with the housing element 202. It should be noted that the openings on the bottom wall 222 of the housing element 202 may be embodied as through-holes. The mechanical fasteners 406 may embody any one of a bolt, rivet, screw, pin, and the like. Alternatively, the first section 402 of the plate 400 may be connected to the housing element 202 using a joining process, such as, welding, brazing, and/or soldering. In another example, an adhesive may be used to connect the first section 402 of the plate 400 to the housing element 202. It should be noted that the plate 400 is mounted in the housing element 202, and is retained therein during operation of the engine 102.

The plate 400 also includes a second section 408. The second section 408 extends from the first section 402. The second section 408 is configured to move relative to the first section 402 and the bottom wall 222 of the housing element 202. A positioning of the air cooler 116 within the interior space 218 of the second section 217 is adjusted based on a movement of the second section 408 of the plate 400. The plate 400 is positioned on the bottom wall 222 of the housing element 202, such that the second section 408 of the plate 400 is configured to contact with the central portion of the air cooler 116. The second section 408 of the plate 400 has a curved profile such that a leading edge 412 (see FIG. 4) of the plate 400 projects into the interior space 218 of the second section 217.

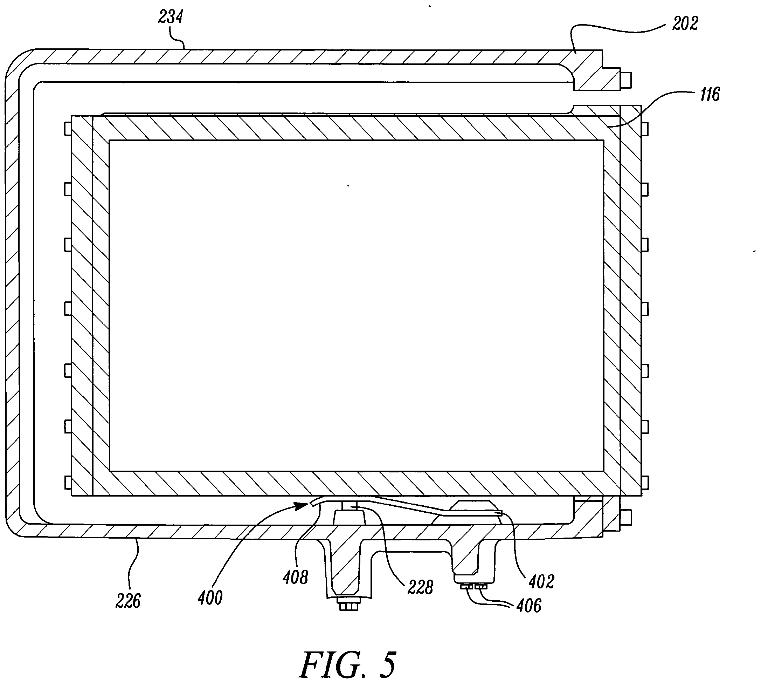

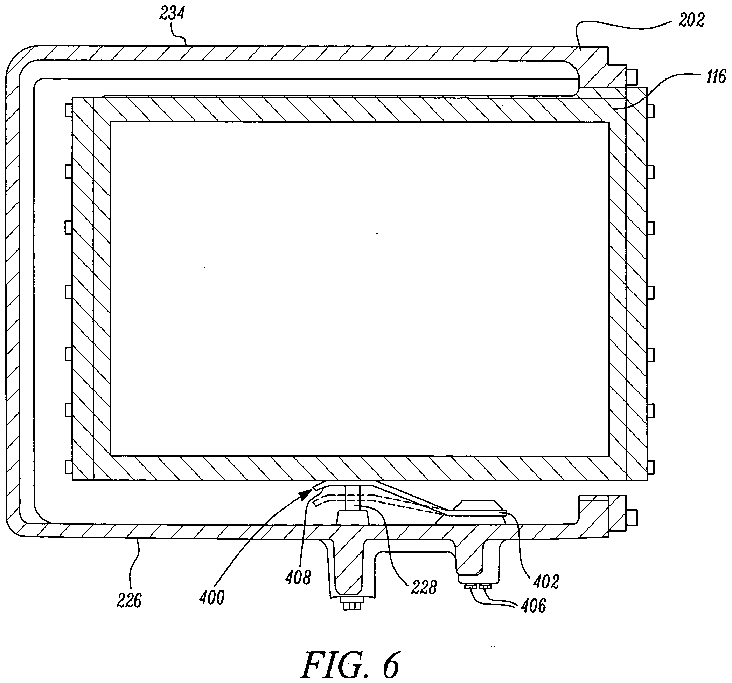

As shown in FIG. 3, the housing element 202 includes bores 224 provided at the bottom wall 222 of the housing element 202. In one example, the housing element 202 may include a pair of bores 224. Alternatively, any number of bores 224 may be provided. The bores 224 are embodied as through-holes. The bores 224 communicate with the inner side 220 and an outer side 226 (see FIGS. 5 and 6) of the bottom wall 222 of the housing element 202. Screw elements 228 (see FIG. 5) are configured to be received through the bores 224, from the outer side 226 of the bottom wall 222 of the housing element 202. The screw elements 228 may embody any of a screw, bolt, rivet, pin, and the like. The screw elements 228 may be threadably received within the corresponding bores 224.

The screw elements 228 are configured to move the plate 400 within the interior space 218 of the second section 217. More particularly, a tightening of the screw elements 228 is configured to move the second section 408 of the plate 400 within the housing element 202. The tightening of the screw elements 228 causes a vertical displacement of the second section 408 of the plate 400 with respect to the bottom wall 222 of the housing element 202. Accordingly, a position of the air cooler 116 within the interior space 218 of the housing element 202 may be adjusted and will now be explained in detail in connection with FIGS. 5, 6, and 7. For the purpose of clarity, the internal structure of the air cooler 116 is not shown in the cross sectional views illustrated in FIGS. 5, 6, and 7.

Referring to FIG. 5, the air cooler 116 is provided within the interior space 218 of the second section 217. The air cooler 116 is inserted above and adjacent to the second section 408 of the plate 400, through the opening 216 of the housing element 202 (see FIG. 3). The air cooler 116 slides over the surface 410 of the plate 400 during the insertion of the air cooler 116 within the housing element 202.

Once the air cooler 116 is provided within the housing element 202, the screw elements 228 are tightened by personnel in charge of the assembly process. The personnel can tighten the screw elements 228 from outside of the housing element 202. The tightening of the screw elements 228 causes the screw elements 228 to contact the second section 408 of the plate 400 (as shown in FIG. 5). As shown in FIG. 6, the continual tightening of the screw elements 228 in turn causes the second section 408 of the plate 400 to move within the interior space 218 of the second section 217. More particularly, the tightening of the screw elements 228 causes the vertical displacement of the second section 408 of the plate 400 in an upward direction.

Referring to FIG. 6, the screw elements 228 are tightened continuously till the second section 408 of the plate 400 contacts a bottom surface 117 of the air cooler 116. Therefore, the tightening of the screw elements 228 causes the air cooler 116 to move upwards within the interior space 218 of the housing element 202, thereby adjusting a height of the air cooler 116 within the housing element 202. The screw elements 228 may be tightened till the air cooler 116 is adjusted to an intended height within the housing element 202. In an one embodiment, when the air cooler 116 reaches the intended height, the air cooler 116 may be sealed within the housing element 202 using mechanical fasteners (not shown) provided from outside of the housing element 202.

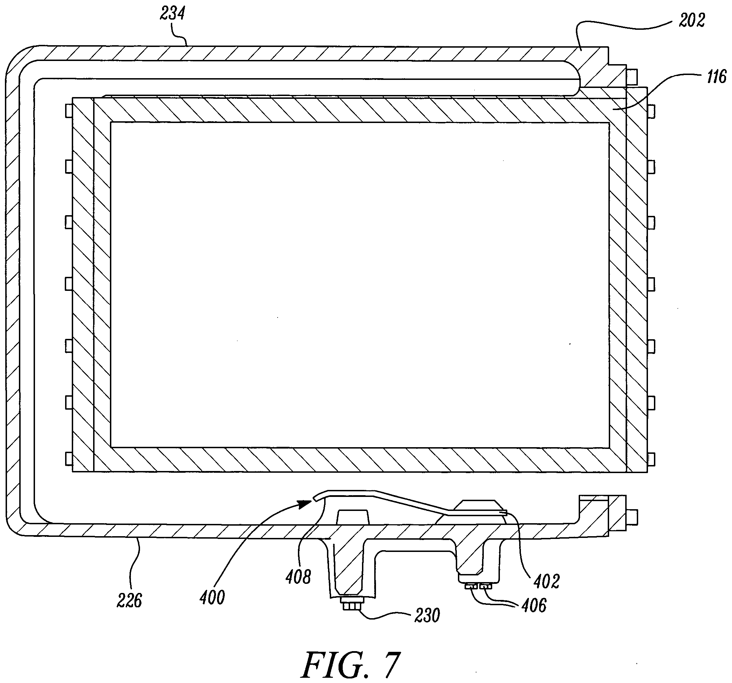

Referring now to FIG. 7, once the air cooler 116 is adjusted and sealed within the housing element 202, the screw elements 228 may be removed from the bores 224 provided on the bottom wall 222 of the housing element 202. Once the screw elements 228 are removed, the plate 400 may no longer contact the air cooler 116; however, the plate 400 may still remain within the housing element 202. Further, after removal of the screw elements 228, the bores 224 may be sealed using screw plugs 230. Alternatively, any other means may be used for sealing of the bores 224.

Referring to FIGS. 1 and 2, when the engine system 100 starts, compressed intake air from the turbocharger 112 is received and stored within the inlet portion 206 of the housing element 202 (intake air flow direction shown using arrows "A" in FIG. 2). Further, the compressed intake air may flow over the air cooler 116. The cooled intake air then exits the outlet portion 212 of the housing element 202 and is introduced in the cylinder head of the engine 102, via the outlet portion 212 of the housing element 202. In another example, the cooled intake air may exit the outlet portion 212 of the housing element 202 and is introduced into the charge-air duct, via the outlet portion 212 of the housing element 202.

The housing element 202 may be made from any metallic or non-metallic material. Further, the application of the housing element 202 and the assembly process of the air cooler 116 disclosed herein is exemplary, and does not limit the scope of the present disclosure. The application of the present disclosure may be extended to any type of engine or non-engine application, based on system requirements.

### Industrial Applicability

The housing element 202 described above houses the air cooler 116 and also receives and collects the compressed intake air from the turbocharger 112. Hence, the engine system 100 does not necessarily require a separate air inlet housing to collect the compressed intake air, thereby saving costs associated with manufacturing and assembly.

The present disclosure describes the process for adjusting, aligning, and sealing the air cooler 116 within the housing element 202. The process disclosed herein is easy to apply and is less time consuming. The housing element 202 includes the plate 400, such that, by adjusting the height of the plate 400 within the housing element 202, the air cooler 116 is adjusted and aligned within the housing element 202. Further, the shape of the plate 400 is such that the air cooler 116 may slide over the plate 400 during the assembly or disassembly of the air cooler 116 without requiring special tools for maintenance, thereby reducing costs.

The plate 400 may be provided such that the plate 400 contacts the air cooler 116 approximately at the central portion of the bottom surface 117 of the air cooler 116. This may allow proper alignment of the air cooler 116 based on the movement of the air cooler 116 within the housing element 202. Further, once the air cooler 116 is sealed within the housing element 202, the screw elements 228 may be removed and replaced by the screw plugs 230. Thus, the plate 400 may no longer contact the air cooler 116 during the operation of the engine 102, thereby reducing any redundant engine connections and associated vibrational noise.

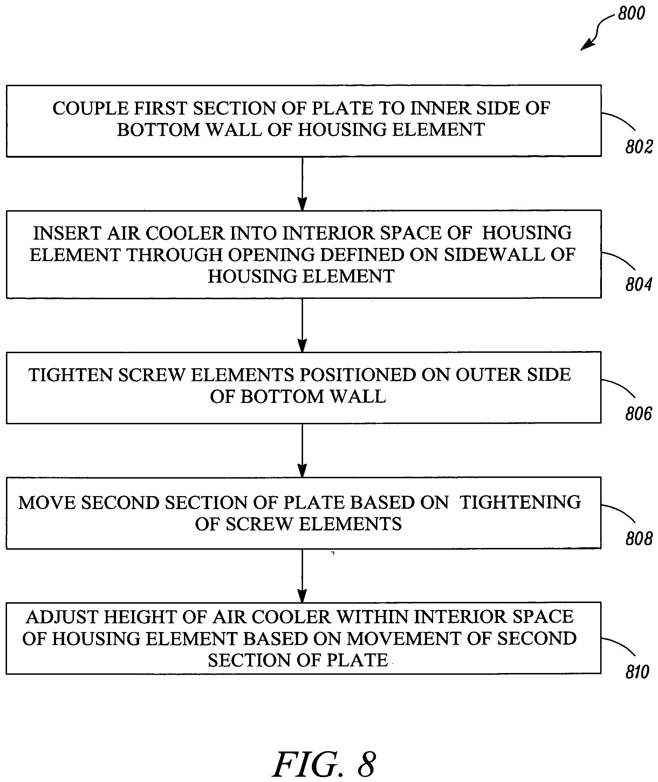

FIG. 8 is a flowchart for a method 800 of positioning the air cooler 116 within the interior space 218 of the second section 217. At step 802, the first section 402 of the plate 400 is coupled to the inner side 220 of the bottom wall 222 of the housing element 202. At step 804, the air cooler 116 is inserted into the interior space 218 of the housing element 202 through the opening 216 defined on the third sidewall 214 of the housing element 202. The air cooler 116 is inserted above and adjacent to the second section 408 of the plate 400. Further, the air cooler 116 slides over the surface 410 of the plate 400 during the insertion of the air cooler 116.

At step 806, the screw elements 228 positioned on the outer side 226 of the bottom wall 222 are tightened. At step 808, the second section 408 of the plate 400 is moved based on the tightening of the screw elements 228. Further, due to the tightening of the screw elements 228, the second section 408 of the plate 400 is vertically displaced within the housing element 202. At step 810, the height of the air cooler 116 within the interior space 218 of the housing element 202 is adjusted based on the movement of the second section 408 of the plate 400. After the adjustment of the air cooler 116, the screw elements 228 are removed from the bottom wall 222 of the housing element 202. Once the screw elements 228 are removed, the bores 224 are sealed using the screw plugs 230.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

## Claims

1. A housing element (202) associated with an engine system (100), the housing element (202) comprising:
an inlet portion (206) defined on a first sidewall (204) of the housing element (202);
an outlet portion (212) defined on a second sidewall (210) of the housing element (202);
an opening (216) defined on a third sidewall (214) of the housing element (202) and being configured to receive an air cooler (116) therethrough, the third sidewall (214) being adjacent and generally perpendicular to the second sidewall (210); and
a plate (400) including a first section (402) and a second section (408), the first section (402) of the plate (400) being fixedly coupled to an inner side (220) of a bottom wall (222) of the housing element (202), wherein
the second section (408) extends from the first section (402),
the second section (408) is configured to move relative to the bottom wall (222) of the housing element (202), and
a position of the air cooler (116) within an interior space (208) of the housing element (202) is configured to be adjusted based on the movement of the second secion (408) the plate (400).

2. The housing element (202) of claim 1 further comprising screw elements (228) configured to be received through an outer side (226) of the bottom wall (222) of the housing element (202), wherein a tightening of the screw elements (228) is configured to move the second section (408) of the plate (400).

3. The housing element (202) of claim 1, wherein the outlet portion (212) is configured to connect to at least one of a charge-air duct or a cylinder head of the engine system (100).

4. The housing element (202) of claim 1, wherein the inlet portion (206) is configured to connect to a turbocharger (112).

5. The housing element (202) of claim 1, wherein the plate (400) is positioned such that the second section (408) of the plate (400) is configured to contact with a central portion of the air cooler (116).

6. The housing element (202) of claim 1, wherein the second section (408) of the plate (400) has a curved profile such that a leading edge (412) of the plate (400) projects into the interior space (208) of the housing element (202).

7. A method for positioning an air cooler (116) within an interior space (208) of a housing element (202), the method comprising:
coupling a first section (402) of a plate (400) to an inner side (220) of a bottom wall (222) of the housing element (202);
inserting the air cooler (116) into the interior space (208) of the housing element (202) through an opening (216) defined on a sidewall (214) of the housing element (202), wherein the air cooler (116) is inserted above and adjacent to a second section (408) of the plate (400);
tightening screw elements (228) positioned on an outer side (226) of the bottom wall (222);
moving the second section (408) of the plate (400) based on the tightening of the screw elements (228); and
adjusting a height of the air cooler (116) within the interior space (208) of the housing element (202) based on the movement of the second section (408) of the plate (400).

8. The method of claim 7 further comprising:
removing the screw elements (228) from the bottom wall (222) after the adjustment; and
sealing of bores (224) corresponding to the screw elements (228) based on the removal.

## Patentansprüche

1. Zu einem Motorsystem (100) zugehöriges Gehäuseelement (202), wobei das Gehäuseelement (202) umfasst:
einen Einlassbereich (206), der auf einer ersten Seitenwand (204) des Gehäuseelements (202) definiert ist;
einen Auslassbereich (212), der auf einer zweiten Seitenwand (210) des Gehäuseelements (202) definiert ist;
eine Öffnung (216) die der auf einer dritten Seitenwand (214) des Gehäuseelements (202) definiert und eingerichtet ist, um einen Luftkühler (116) dort hindurch aufzunehmen, wobei die dritte Seitenwand (214) benachbart und allgemein senkrecht zu der zweiten Seitenwand (210) ist; und
eine Platte (400), beinhaltend einen ersten Abschnitt (402) und einen zweiten Abschnitt (408), wobei der erste Abschnitt (402) der Platte (400) fest mit einer inneren Seite (220) einer Unterwand (222) des Gehäuseelements (202) gekoppelt ist, wobei
der zweite Abschnitt (408) sich von dem ersten Abschnitt (402) her erstreckt,
der zweite Abschnitt (408) eingerichtet ist, um sich relativ zu der Unterwand (222) des Gehäuseelements (202) zu bewegen, und
eine Position des Luftkühlers (116) innerhalb eines Innenraums (208) des Gehäuseelements (202) eingerichtet ist, um auf Grundlage der Bewegung des zweiten Abschnitts (408) der Platte (400) angepasst zu werden.

2. Gehäuseelement (202) nach Anspruch 1, weiter umfassend Schraubenelemente (228), die eingerichtet sind, um durch eine äußere Seite (226) der Unterwand (222) des Gehäuseelements (202) aufgenommen zu werden, wobei ein Festziehen des Schraubenelements (228) eingerichtet ist, um den zweiten Abschnitt (408) der Platte (400) zu bewegen.

3. Gehäuseelement (202) nach Anspruch 1, wobei der Auslassbereich (212) eingerichtet ist, um sich mit mindestens einem von einem Ladeluftkanal oder einem Zylinderkopf des Motorsystems (100) zu verbinden.

4. Gehäuseelement (202) nach Anspruch 1, wobei der Einlassbereich (206) eingerichtet ist, um sich mit einem Turbolader (112) zu verbinden.

5. Gehäuseelement (202) nach Anspruch 1, wobei die Platte (400) derart positioniert ist, dass der zweite Abschnitt (408) der Platte (400) eingerichtet ist, um einen zentralen Bereich des Luftkühlers (116) zu kontaktieren.

6. Gehäuseelement (202) nach Anspruch 1, wobei der zweite Abschnitt (408) der Platte (400) ein kurviges Profil aufweist, so dass eine Führungskante (412) der Platte (400) in den Innenraum (208) des Gehäuseelements (202) hinein hervorspringt.

7. Verfahren zum Positionieren eines Luftkühlers (116) innerhalb eines Innenraums (208) eines Gehäuseelements (202), wobei das Verfahren umfasst:
Koppeln eines ersten Bereichs (402) einer Platte (400) mit einer inneren Seite (220) einer Unterwand (222) des Gehäuseelements (202);
Einsetzen des Luftkühlers (116) in den Innenraum (208) des Gehäuseelements (202) hinein, durch eine Öffnung (216) die der auf einer Seitenwand (214) des Gehäuseelements (202) definiert ist, wobei der Luftkühler (116) oberhalb und benachbart zu einem zweiten Abschnitt (408) der Platte (400) eingesetzt wird;
Festziehen von Schraubenelementen (228), die auf einer äußeren Seite (226) der Unterwand (222) positioniert sind;
Bewegen des zweiten Abschnitts (408) der Platte (400) auf Grundlage des Festziehens der Schraubenelemente (228); und
Anpassen einer Höhe des Luftkühlers (116) innerhalb des Innenraums (208) des Gehäuseelements (202) auf Grundlage der Bewegung des zweiten Abschnitts (408) der Platte (400).

8. Verfahren nach Anspruch 7, weiter umfassend:
Entfernen der Schraubenelemente (228) von der Unterwand (222) nach dem Anpassen; und
Abdichten von Bohrungen (224), die den Schraubenelementen (228) entsprechen, auf Grundlage des Entfernens.

## Revendications

1. Élément formant logement (202) associé à un système de moteur (100), l'élément formant logement (202) comprenant :
une portion admission (206) définie sur une première paroi latérale (204) de l'élément formant logement (202) ;
une portion refoulement (212) définie sur une deuxième paroi latérale (210) de l'élément formant logement (202) ;
une ouverture (216) définie sur une troisième paroi latérale (214) de l'élément formant logement (202) et étant configurée pour recevoir un refroidisseur d'air (116) à travers cette dernière, la troisième paroi latérale (214) étant adjacente et globalement perpendiculaire à la deuxième paroi latérale (210) ; et
une plaque (400) incluant une première section (402) et une seconde section (408), la première section (402) de la plaque (400) étant accouplée de manière fixe à un côté intérieur (220) d'une paroi de fond (222) de l'élément formant logement (202), dans lequel
la seconde section (408) s'étend à partir de la première section (402),
la seconde section (408) est configurée pour se déplacer par rapport à la paroi de fond (222) de l'élément formant logement (202), et
une position du refroidisseur d'air (116) à l'intérieur d'un espace intérieur (208) de l'élément formant logement (202) est configurée pour être ajustée sur la base du mouvement de la seconde section (408) de la plaque (400).

2. Élément formant logement (202) selon la revendication 1 comprenant en outre des éléments formant vis (228) configurés pour être reçus à travers un côté extérieur (226) de la paroi de fond (222) de l'élément formant logement (202), dans lequel un serrage des éléments formant vis (228) est configuré pour déplacer la seconde section (408) de la plaque (400).

3. Élément formant logement (202) selon la revendication 1, dans lequel la portion refoulement (212) est configurée pour raccordement à au moins l'un d'un conduit d'air de suralimentation ou d'une culasse du système de moteur (100).

4. Élément formant logement (202) selon la revendication 1, dans lequel la portion admission (206) est configurée pour raccordement à un turbocompresseur (112).

5. Élément formant logement (202) selon la revendication 1, dans lequel la plaque (400) est positionnée de sorte que la seconde section (408) de la plaque (400) est configurée pour entrer en contact avec une portion centrale du refroidisseur d'air (116).

6. Élément formant logement (202) selon la revendication 1, dans lequel la seconde section (408) de la plaque (400) a un profil courbe de sorte qu'un bord d'attaque (412) de la plaque (400) dépasse jusque dans l'espace intérieur (208) de l'élément formant logement (202).

7. Procédé pour positionner un refroidisseur d'air (116) dans un espace intérieur (208) d'un élément formant logement (202), le procédé comprenant :
l'accouplement d'une première section (402) d'une plaque (400) à un côté intérieur (220) d'une paroi de fond (222) de l'élément formant logement (202) ;
l'insertion du refroidisseur d'air (116) jusque dans l'espace intérieur (208) de l'élément formant logement (202) à travers une ouverture (216) définie sur une paroi latérale (214) de l'élément formant logement (202), dans lequel le refroidisseur d'air (116) est inséré au-dessus et adjacent à une seconde section (408) de la plaque (400) ;
le serrage d'éléments formant vis (228) positionnés sur un côté extérieur (226) de la paroi de fond (222) ;
le déplacement de la seconde section (408) de la plaque (400) sur la base du serrage des éléments formant vis (228) ; et
l'ajustement d'une hauteur du refroidisseur d'air (116) dans l'espace intérieur (208) de l'élément formant logement (202) sur la base du mouvement de la seconde section (408) de la plaque (400).

8. Procédé selon la revendication 7, comprenant en outre :
l'enlèvement des éléments formant vis (228) depuis la paroi de fond (222) après l'ajustement ; et
le scellement d'alésages (224) correspondant aux éléments formant vis (228) sur la base de l'enlèvement.
